# EUROPÄISCHE PATENTSCHRIFT

(11) **EP 1 663 692 B1**
(45) Veröffentlichungstag und Bekanntmachung des Hinweises auf die Patenterteilung: **20.12.2006**
(21) Anmeldenummer: 04766384.4
(22) Anmeldetag: 30.07.2004
(51) Int. Cl.: B60K 15/077

(54) **KRAFTSTOFFBEHÄLTER FÜR EIN KRAFTFAHRZEUG**
FUEL TANK FOR A MOTOR VEHICLE
RESERVOIR A CARBURANT DESTINE A UN VEHICULE

(30) Priorität: 10.09.2003 DE 10342081
(43) Veröffentlichungstag der Anmeldung: 07.06.2006
(73) Patentinhaber: SIEMENS AKTIENGESELLSCHAFT, 80333 München (DE)
(72) Erfinder: RUMPF, Bernd, 61130 Nidderau-Windecken (DE)
(86) Internationale Anmeldenummer: PCT/EP2004/051676
(87) Internationale Veröffentlichungsnummer: WO 2005/025915

(56) Entgegenhaltungen:
- EP-A- 0 798 457
- DE-A- 4 337 183
- DE-A- 19 955 133
- FR-A- 2 709 100
- US-A- 5 040 516
- US-A- 5 743 239

## Beschreibung

Die Erfindung betrifft einen Kraftstoffbehälter für ein Kraftfahrzeug mit mehreren Kammern zum Sammeln von Kraftstoff, mit einer in der Förderleistung regelbaren Kraftstoff-Fördereinheit, mit in zumindest einigen der Kammern des Kraftstoffbehälters angeordneten Saugstrahlpumpen zur Förderung von Kraftstoff zu der Fördereinheit, mit einer von der Druckseite der Kraftstoff-Fördereinheit zu der Saugstrahlpumpe geführten Treibmittelleitung, mit einem Füllstandssensor zur Ermittlung des Füllstandes an Kraftstoff und mit einer Steuereinheit zur Auswertung der Signale des Füllstandssensors und zur Ansteuerung der Fördereinheit.

Solche Kraftstoffbehälter werden beispielsweise als Satteltank ausgebildet und sind aus der Praxis bekannt. Dabei dienen die Saugstrahlpumpen zur Förderung des Kraftstoffs aus der entsprechenden Kammer zu der Fördereinheit oder der die Fördereinheit aufnehmenden Kammer. Häufig hat die Fördereinheit einen von einer weiteren Saugstrahlpumpe befüllbaren Schwalltopf zum Sammeln von Kraftstoff. Es ist bereits bekannt, die Förderleistung der Fördereinheit in Abhängigkeit von Signalen eines in einer Vorlaufleitung angeordneten Druckreglers und damit in Abhängigkeit von dem Verbrauch des Kraftstoffs zu regeln, um damit ein unnötiges Umherpumpen von Kraftstoff in dem Kraftstoffbehälter zu vermeiden. Jedoch muss die Fördereinheit auch bei einem besonders geringen Verbrauch die Förderung des Kraftstoffs zu den Saugstrahlpumpen aufrechterhalten und damit eine minimale Förderleistung sicherstellen. Dies wird in der Regel mit einer minimalen Pumpendrehzahl erreicht. Mit steigender Anzahl der Kammern steigt die minimale Förderleistung, da die Anzahl der Saugstrahlpumpen ebenfalls steigt.

Die FR-A-2 709 100 zeigt einen Kraftstoffbehälter mit mehreren Kammern und in diesen Kammern angeordneten Saugstrahlpumpen. Ein Füllstandssensor ist nicht genannt. Aus der US-A-5 743 239 ist ein Kraftstofftank mit einer Hauptkammer bekannt, in der eine Saugstrahlpumpe angeordnet ist. Zusätzlich ist ein Füllstandssensor vorgesehen. In der EP-A-0 798 457 sind eine elektrische Pumpe und ein Füllstandssensor gezeigt. Die Förderleistung der elektrischen Pumpe wird in Abhängigkeit vom Füllstand gesteuert, und die Verwendung von Saugstrahlpumpen wird abgelehnt.

Bei dem bekannten Kraftstoffbehälter wird jedoch durch die von der Anzahl der Saugstrahlpumpen festgelegte Förderleistung der Fördereinheit eine große Menge an Kraftstoff im Kraftstoffbehälter bewegt. Zudem werden bei nahezu leerem Kraftstoffbehälter sämtliche Saugstrahlpumpen über die Treibmittelleitungen mit Kraftstoff versorgt, auch wenn in der jeweiligen Kammer kein Kraftstoff vorhanden ist. Diese Bewegung führt zu Schaumbildung und zu einer ansteigenden Verdunstung des Kraftstoffs, was eine hohe Permeation des Kraftstoffs in die Umgebung des Kraftstoffbehälters zur Folge hat.

Der Erfindung liegt das Problem zugrunde, einen Kraftstoffbehälter der eingangs genannten Art so zu gestalten, dass eine Bewegung von Kraftstoff möglichst gering gehalten wird.

Dieses Problem wird erfindungsgemäß dadurch gelöst, dass in mehreren Kammern jeweils ein Füllstandssensor zur Ermittlung des Füllstandes an Kraftstoff in der jeweiligen Kammer angeordnet ist und dass Mittel zur Verringerung der Förderung von Kraftstoff zu der in einer nahezu leeren Kammer befindlichen Saugstrahlpumpe vorgesehen sind.

Durch diese Gestaltung lässt sich die Förderleistung bei einer oder mehreren leeren Kammern des Kraftstoffbehälters derart verringern, dass die Saugstrahlpumpen weniger oder keinen Kraftstoff mehr erhalten. Die Verringerung der Förderung von Kraftstoff zu den Saugstrahlpumpen führt zu einer Verringerung der Bewegung des Kraftstoffs im Kraftstoffbehälter. Es muss nicht in jeder einzelnen Kammer jeweils eine Saugstrahlpumpe mit einem Füllstandssensor angeordnet sein. Es kann genügen, wenn an einigen der Kammern Saugstrahlpumpen und Füllstandssensoren angeordnet sind.

Die Mittel zur Verringerung der Förderung gestalten sich gemäß einer vorteilhaften Weiterbildung der Erfindung konstruktiv besonders einfach, wenn die Steuereinheit zur Verminderung der Förderleistung der Fördereinheit bei einer nahezu leeren Kammer ausgebildet ist. Damit lässt sich die Förderleistung der Fördereinheit in Abhängigkeit des Füllstandes an Kraftstoff in den jeweiligen Kammern des erfindungsgemäßen Kraftstoffbehälters anpassen.

Die Steuereinheit vermag gemäß einer vorteilhaften Weiterbildung der Erfindung die Füllstände der einzelnen Kammern getrennt zu ermitteln und in Abhängigkeit von den Füllständen die Förderleistung der Fördereinheit regeln, wenn in den Kammern jeweils ein Füllstandssensor angeordnet ist und wenn die Füllstandssensoren einzeln mit der Steuereinheit verbunden sind. Diese Gestaltung hat den Vorteil, dass auch eine in der ersten Kammer zur Befüllung eines Schwalltopfes der Fördereinheit vorgesehene Saugstrahlpumpe weniger oder keinen Kraftstoff erhält, wenn die erste Kammer leer ist.

Neben der separaten Anordnung der Steuereinheit, kann diese Funktion auch in die Motorsteuerelektronik eingebunden sein.

Die Zufuhr von Kraftstoff zu der Saugst rahlpumpe bei nahezu leerer Kammer lässt sich gemäß einer anderen vorteilhaften Weiterbildung der Erfindung einfach unterbinden, wenn in der Treibmittelleitung ein in Abhängigkeit von dem Füllstand in der die Saugstrahlpumpe enthaltenen Kammer schaltbares Ventil angeordnet ist.

Das Ventil vermag selbsttätig bei verminderter Förderleistung der Fördereinheit die Kraftstoffzufuhr zu der Saugstrahlpumpe zu unterbinden, wenn das Ventil als Drucköffnungsventil ausgebildet ist und im Grundzustand unterhalb eines vorgesehenen Druckes in der Treibmittelleitung verschlossen ist.

Bei mehreren Kammern und Saugstrahlpumpen lassen sich gemäß einer anderen vorteilhaften Weiterbildung der Erfindung die Saugstrahlpumpen einzeln abschalten, wenn das Ventil elektrisch schaltbar und mit der Steuereinheit verbunden ist.

Die Saugstrahlpumpen lassen sich gemäß einer anderen vorteilhaften Weiterbildung der Erfindung jeweils einfach mit einem Füllstandssensor und dem Ventil zu einer baulichen Einheit zusammenfassen, wenn das Ventil von einem Schwimmer des Füllstandssensors schaltbar ist. Im einfachsten Fall genügt es, einen Schließkörper des Ventils über ein Gestänge mit dem Schwimmer zu verbinden. Dies trägt zur Verminderung des Montageaufwandes des erfindungsgemäßen Kraftstoffbehälters bei.

Ein Trockenlaufen der Fördereinheit bei einem Defekt der Füllstandssensoren lässt sich gemäß einer anderen vorteilhaften Weiterbildung der Erfindung einfach vermeiden durch Mittel zum Umschalten der Fördereinheit auf maximale Pumpenleistung und/oder zum Öffnen des in der Treibmittelleitung angeordneten Ventils bei Ausfall eines der Füllstandssensoren.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: schematisch eine Schnittdarstellung durch einen erfindungsgemäßen Kraftstoffbehälter,
- Figur 2: schematisch eine Schnittdarstellung durch ein in einer Treibmittelleitung des Kraftstoffbehälters aus Figur 1 angeordnetes, schwimmerbetätigtes Ventil,
- Figur 3: schematisch eine Schnittdarstellung durch ein in einer Treibmittelleitung des Kraftstoffbehälters aus Figur 1 angeordnetes, elektrisch schaltbares Ventil,
- Figur 4: schematisch eine Schnittdarstellung durch ein in einer Treibmittelleitung des Kraftstoffbehälters aus Figur 1 angeordnetes, druckgesteuertes Ventil,

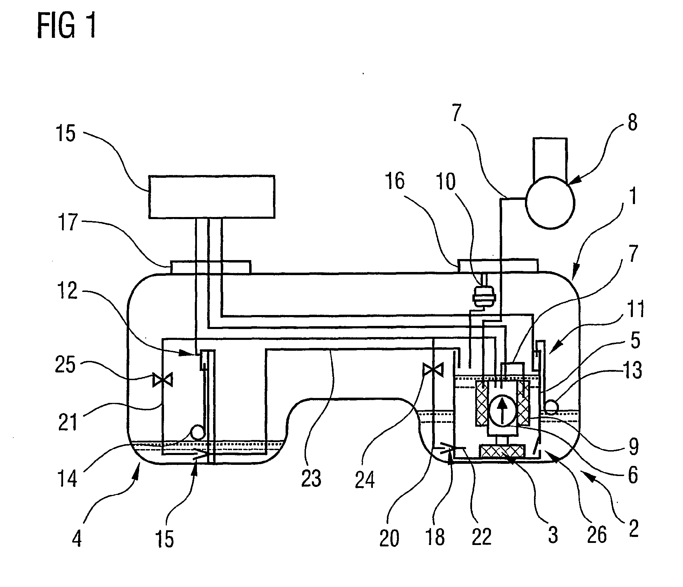

Figur 1 zeigt einen Kraftstoffbehälter 1 für ein Kraftfahrzeug mit einer in einer ersten Kammer 2 angeordneten Kraftstoff-Fördereinheit 3 und mit einer zweiten Kammer 4. Die Kraftstoff-Fördereinheit 3 hat eine elektrisch angetriebene, in einem Schwalltopf 5 angeordnete Kraftstoffpumpe 6 zur Förderung von Kraftstoff über eine Vorlaufleitung 7 zu einer Brennkraftmaschine 8 des Kraftfahrzeuges. In der Vorlaufleitung 7 sind ein Kraftstofffilter 9 und ein Druckregelventil 10 angeordnet. Bei Überschreiten eines vorgesehenen Drucks in der Vorlaufleitung 7 wird über das Druckregelventil 10 Kraftstoff in den Schwalltopf 5 zurückgeführt. An dem Schwalltopf 5 ist ein Füllstandssensor 11 angeordnet. Die zweite Kammer 4 hat ebenfalls einen Füllstandssensor 12. Die Füllstandssensoren 11, 12 haben jeweils einen dem Füllstand an Kraftstoff in der jeweiligen Kammer 2, 4 folgenden Schwimmer 13, 14. Die Füllstandssensoren 11, 12 und die Kraftstoff-Fördereinheit 3 sind elektrisch mit einer Steuereinheit 15 verbunden. Weiterhin hat der Kraftstoffbehälter 1 zwei Montageflansche 16, 17 durch die die verschiedenen Bauteile in dem Kraftstoffbehälter 1 montiert werden. In den Kammern 2, 4 ist jeweils eine Saugstrahlpumpe 18, 19 angeordnet. Die Saugstrahlpumpen 18, 19 sind über Treibmittelleitungen 20, 21 mit der Druckseite der Kraftstoff-Fördereinheit 3 verbunden. Von den Saugstrahlpumpen 18, 19 münden Kraftstoffleitungen 22, 23 in den Schwalltopf 5. In den Treibmittelleitungen 20, 21 ist jeweils ein Ventil 24, 25 angeordnet. Weiterhin kann der Schwalltopf 5 ein als Rückschlagventil ausgebildetes Bodenventil 26 aufweisen, welches ein Einströmen von Kraftstoff aus der ersten Kammer 2 in den Schwalltopf 5 ermöglicht, aber ein Abfließen verhindert.

Die Steuerelektronik 15 ermittelt aus den Signalen der Füllstandssensoren 11, 12 den jeweiligen Stand an Kraftstoff in den Kammern 2, 4 und vermindert die Förderleistung der Kraftstoff-Fördereinheit 3, wenn einer der beiden Kammern 2, 4 nahezu leer ist. Damit wird die Menge des den Saugstrahlpumpen 18, 19 über die Treibmittelleitungen 20, 21 zugeführten Kraftstoffs vermindert. Gleichzeitig verschließen die Ventile 24, 25 die entsprechende Treibmittelleitung 20, 21. Hierdurch wird ein unnötiges Überströmen an Kraftstoff und damit eine Schaumbildung vermindert.

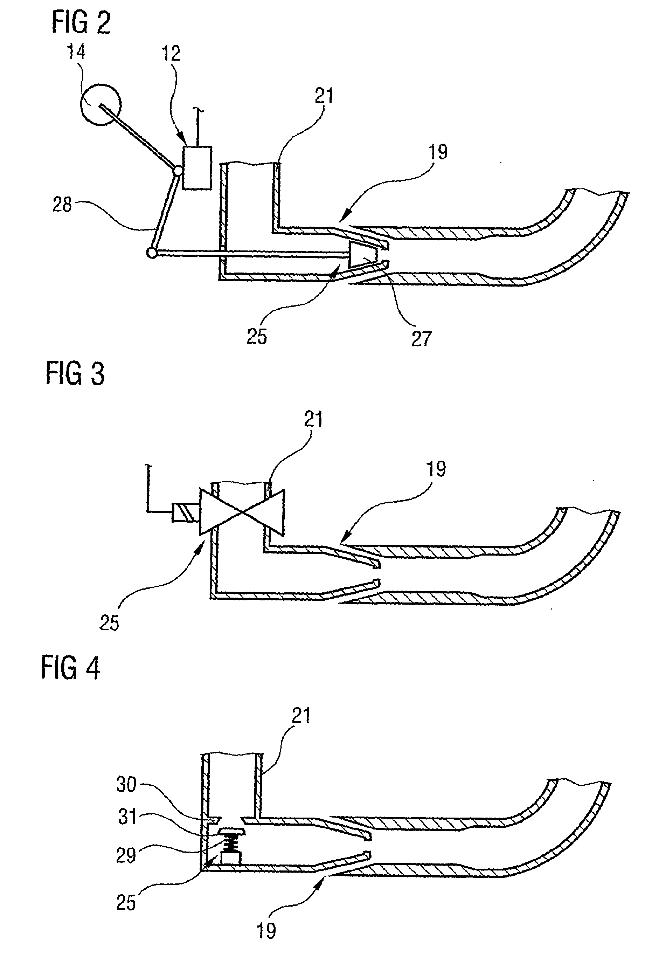

Figur 2 zeigt schematisch in einer Schnittdarstellung eine erste Ausführungsform des in einer der Treibmittelleitungen 21 angeordneten Ventils 25 des Kraftstoffbehälters 1 aus Figur 1. Das Ventil 25 hat einen die Saugstahlpumpe 19 verschließenden Ventilkörper 27. Der Ventilkörper 27 ist über ein Gestänge 28 mit dem Schwimmer 14 des Füllstandssensors 12 verbunden. Bei niedrigem Füllstand in der die Saugstrahlpumpe 19 aufnehmenden Kammer 4 wird der Ventilkörper 27 in eine die Saugstrahlpumpe 19 verschließende Stellung bewegt. Damit wird eine Förderung von Kraftstoff durch die Saugstrahlpumpe 19 bei nahezu leerer Kammer 4 verhindert.

Figur 3 zeigt schematisch in einer Schnittdarstellung eine zweite Ausführungsform des in einer der Treibmittelleitungen 21 angeordneten Ventils 25. Das Ventil 25 ist elektrisch schaltbar und mit der Steuereinheit 15 aus Figur 1 verbunden. Wenn der in der entsprechenden Kammer 4 aus Figur 1 angeordnete Füllstandssensor 12 ermittelt, dass die Kammer 4 nahezu leer ist, steuert die Steuereinheit 15 das Ventil 25 an, wodurch die Treibmittelleitung 21 verschlossen wird. Damit erhält die entsprechende Saugstrahlpumpe 19 keinen Kraftstoff.

Figur 4 zeigt schematisch eine weitere Ausführungsform des in einer der Treibmittelleitungen 21 angeordneten Ventils 25. Das Ventil 25 hat einen von einem Federelement 29 gegen einen Ventilsitz 30 vorgespannten Schließkörper 31. Wenn über die Füllstandssensoren 11, 12 ermittelt wird, dass eine oder mehrere Kammern 2, 4 des Kraftstoffbehälters 1 aus Figur 1 nahezu leer sind, senkt die Steuereinheit 15 die Förderleistung der Kraftstoffpumpe 6, was zu einem Druckabfall in den Treibmittelleitungen 20, 21 führt. Bei diesem Druckabfall wird der Schließkörper 31 von der Kraft des,Federelementes 29 gegen den Ventilsitz 30 gedrückt und verschließt die Treibmittelleitung 21.

## Patentansprüche

1. Kraftstoffbehälter für ein Kraftfahrzeug mit mehreren Kammern (2, 4) zum Sammeln von Kraftstoff, mit einer in der Förderleistung regelbaren Kraftstoff-Fördereinheit (3), mit in zumindest einigen der Kammern (2, 4) des Kraftstoffbehälters angeordneten Saugstrahlpumpen (18, 19) zur Förderung von Kraftstoff zu der Fördereinheit, mit einer von der Druckseite der KraftstoffFördereinheit (3) zu der Saugstrahlpumpe (18; 19) geführten Treibmittelleitung (20; 21), mit einem Füllstandssensor (11; 12) zur Ermittlung des Füllstandes an Kraftstoff und mit einer Steuereinheit (15) zur Auswertung der Signale des Füllstandssensors (11; 12) und zur Ansteuerung der Fördereinheit (13), **dadurch gekennzeichnet, dass** in mehreren Kammern (2, 4) jeweils ein Füllstandssensor (11, 12) zur Ermittlung des Füllstandes an Kraftstoff in der jeweiligen Kammer (2, 4) angeordnet ist und dass Mittel zur Verringerung der Förderung von Kraftstoff zu der in einer nahezu leeren Kammer (2, 4) befindlichen Saugstrahlpumpe (18, 19) vorgesehen sind.

2. Kraftstoffbehälter nach Anspruch 1, **dadurch gekennzeichnet, dass** die Steuereinheit (15) zur Verminderung der Förderleistung der Fördereinheit (3) bei einer nahezu leeren Kammer (2, 4) ausgebildet ist.

3. Kraftstoffbehälter nach Anspruch 1 oder 2, **dadurch gekennzeichnet, dass** in den Kammern (2, 4) jeweils ein Füllstandssensor (11, 12) angeordnet ist und dass die Füllstandssensoren (11, 12) einzeln mit der Steuereinheit (15) verbunden sind.

4. Kraftstoffbehälter nach zumindest einem der vorhergehenden Ansprüche, **dadurch gekennzeichnet, dass** in der Treibmittelleitung (20, 21) ein in Abhängigkeit von dem Füllstand in der die Saugstrahlpumpe (18, 19) enthaltenen Kammer (2, 4) schaltbares Ventil (24, 25) angeordnet ist.

5. Kraftstoffbehälter nach zumindest einem der vorhergehenden Ansprüche, **dadurch gekennzeichnet, dass** das Ventil (24, 25) als Drucköffnungsventil ausgebildet ist und im Grundzustand unterhalb eines vorgesehenen Druckes in der Treibmittelleitung (20, 21) verschlossen ist.

6. Kraftstoffbehälter nach zumindest einem der vorhergehenden Ansprüche, **dadurch gekennzeichnet, dass** das Ventil (24, 25) elektrisch schaltbar und mit der Steuereinheit (15) verbunden ist.

7. Kraftstoffbehälter nach zumindest einem der vorhergehenden Ansprüche, **dadurch gekennzeichnet, dass** das Ventil (24, 25) von einem Schwimmer (14) des Füllstandssensors (12) schaltbar ist.

8. Kraftstoffbehälter nach zumindest einem der vorhergehenden Ansprüche, **gekennzeichnet durch** Mittel zum Umschalten der Fördereinheit (3) auf maximale Pumpenleistung und/oder zum Öffnen des in der Treibmittelleitung (20, 21) angeordneten Ventils (24, 25) bei Ausfall eines der Füllstandssensoren (11, 12).

## Claims

1. A fuel container for a motor vehicle having a plurality of chambers (2, 4) for collecting fuel, having a fuel feeding unit (3) whose feeding capacity can be regulated, having suction jet pumps (18, 19) which are arranged in at least some of the chambers (2, 4) of the fuel container and have the purpose of feeding fuel to the feeding unit (3), having a propellant line (20, 21) which leads from the pressure side of the fuel feeding unit (3) to the suction jet pump (18, 19), having a filling level sensor (11, 12) for acquiring the filling level of fuel, and having a control unit (15) for evaluating the signals of the filling level sensor (11, 12) and for actuating the feeding unit (3), **characterized in that** in each of a plurality of chambers (2, 4) there is arranged a filling level sensor (11, 12) for determining the filling level of fuel in the respective chamber (2, 4), and **in that** means for reducing the feeding of fuel to the suction jet pump (18, 19) located in a virtually empty chamber (2, 4) are provided.

2. The fuel container as claimed in claim 1, **characterized in that** the control unit (15) is designed to reduce the feeding capacity of the feeding unit (3) when a chamber (2, 4) is virtually empty.

3. The fuel container as claimed in claim 1 or 2, **characterized in that** a filling level sensor (11, 12) is arranged in each of the chambers (2, 4), and **in that** the filling level sensors (11, 12) are individually connected to the control unit (15).

4. The fuel container as claimed in at least one of the preceding claims, **characterized in that** a valve (24, 25) which can be switched as a function of the filling level in the chamber (2, 4) which contains the suction jet pump (18, 19) is arranged in the propellant line (20, 21).

5. The fuel container as claimed in at least one of the preceding claims, **characterized in that** the valve (24, 25) is designed as a pressure-opening valve, and is closed in the home state below a predefined pressure in the propellant line (20, 21).

6. The fuel container as claimed in at least one of the preceding claims, **characterized in that** the valve (24, 25) can be switched electrically and is connected to the control unit (15).

7. The fuel container as claimed in at least one of the preceding claims, **characterized in that** the valve (24, 25) can be switched by a float (14) of the filling level sensor (12).

8. The fuel container as claimed in at least one of the preceding claims, **characterized by** means for switching over the feeding unit (3) to maximum pumping capacity and/or for opening the valve (24, 25) which is arranged in the propellant line (20, 21), when one of the filling level sensors (11, 12) fails.

## Revendications

1. Réservoir à carburant pour un véhicule automobile, comportant plusieurs compartiments (2, 4) destinés à accumuler du carburant, une unité de refoulement de carburant (3) dont la puissance de transfert est réglable, des pompes à jet aspirant (18, 19) disposées dans au moins quelques-uns des compartiments (2, 4) du réservoir à carburant et destinées à propulser du carburant vers l'unité de refoulement (3), une conduite de fluide moteur (20, 21) conduisant du côté pression de l'unité de refoulement de carburant (3) vers les pompes à jet aspirant (18, 19), un capteur de niveau de remplissage (11, 12) permettant de déterminer le niveau de remplissage en carburant et une unité de commande (15) destinée à analyser les signaux du capteur de niveau de remplissage (11, 12) et à commander l'unité de refoulement (3), **caractérisé par le fait qu'**un capteur de niveau de remplissage (11, 12) est disposé dans plusieurs compartiments (2, 4) pour déterminer le niveau de remplissage en carburant dans le compartiment respectif (2, 4) et qu'il est prévu des moyens pour réduire le transfert de carburant vers la pompe à jet aspirant (18, 19) se trouvant dans un compartiment (2, 4) presque vide.

2. Réservoir à carburant selon la revendication 1, **caractérisé par le fait que** l'unité de commande (15) est conçue pour réduire la puissance de transfert de l'unité de refoulement (3) lorsqu'un compartiment (2, 4) est presque vide.

3. Réservoir à carburant selon la revendication 1 ou 2, **caractérisé par le fait qu'**un capteur de niveau de remplissage (11, 12) est disposé dans chaque compartiment (2, 4) et que les capteurs de niveau de remplissage (11, 12) sont reliés un par un à l'unité de commande (15).

4. Réservoir à carburant selon au moins l'une des revendication précédentes, **caractérisé par le fait qu'**une soupape (24, 25) commandée en fonction du niveau de remplissage dans le compartiment renfermant la pompe à jet aspirant (18, 19) est montée sur la conduite de fluide moteur (20, 21).

5. Réservoir à carburant selon au moins l'une des revendication précédentes, **caractérisé par le fait que** la soupape (24, 25) est conçue comme soupape ouvrant à la pression et est, dans son état initial, fermée lorsque la pression dans la conduite de fluide moteur (20, 21) est inférieure à une pression prévue.

6. Réservoir à carburant selon au moins l'une des revendication précédentes, **caractérisé par le fait que** la soupape (24, 25) est commandée électriquement et est reliée à l'unité de commande (15).

7. Réservoir à carburant selon au moins l'une des revendication précédentes, **caractérisé par le fait que** la soupape (24, 25) est commandée par un flotteur (14) du capteur de niveau de remplissage (12).

8. Réservoir à carburant selon au moins l'une des revendication précédentes, **caractérisé par** des moyens permettant de commuter l'unité de refoulement (3) sur une puissance maximum de pompage et/ou d'ouvrir la soupape (24, 25) montée sur la conduite de fluide moteur (20, 21) en cas de défaillance de l'un des capteurs de niveau de remplissage (11, 12).
